# DEMANDE DE BREVET EUROPEEN

(11) **EP 1 028 027 A1**
(43) Date de publication de la demande: **16.08.2000**
(21) Numéro de dépôt: 00420023.4
(22) Date de dépôt: 02.02.2000
(51) Int. Cl.: B60Q 1/30

(54) **Dispositif de fixation rapide pour feux arrière de véhicules routiers ou agricoles**

(30) Priorité: 11.02.1999 FR 9901812
(71) Demandeur: Polyrim, 07100 Saint-Marcel les Annonay (FR)
(72) Inventeur: Fichet, Jérôme, 07100 Annonay (FR)
(74) Mandataire: Bratel, Gérard

(57) **Abrégé**

Le dispositif assure la fixation de feux arrière de signalisation (1) sur un garde-boue (2) de véhicule utilitaire, comportant une face verticale (4). Une pièce d'assemblage (15), liée au boîtier (8) des feux arrière (1), comporte sur ses bords supérieur et inférieur plusieurs pattes saillantes (17), formant des créneaux. Celles-ci coopèrent avec des éléments de glissière, sous forme de griffes (19), solidaires de la partie arrière du garde-boue (2). Le montage des feux arrière (1) s'effectue ainsi par engagement des pattes saillantes (17) de la pièce d'assemblage (15) entre les griffes (19), puis par translation horizontale de l'ensemble des feux arrière (1) avec sa pièce d'assemblage (15).

## Description

La présente invention concerne un dispositif de fixation pour feux arrière de signalisation, sur un véhicule routier et plus particulièrement un véhicule utilitaire, tel que camion, remorque, tracteur routier ou semi-remorque, ou encore un véhicule agricole. Cette invention se rapporte plus spécifiquement à la fixation de feux arrière sur une partie, tournée vers l'arrière, d'un garde-boue équipant de façon habituelle ce genre de véhicules.

Certains garde-boue de véhicules utilitaires, en particulier les garde-boue des tracteurs routiers pour semi-remorques, comportent dans leur partie arrière une face sensiblement verticale, prévue pour recevoir les feux arrière de signalisation. A titre d'exemple, il peut être fait ici référence au brevet français n° 83 19883/2556301 (J.F. FICHET), déposé le 7 décembre 1983.

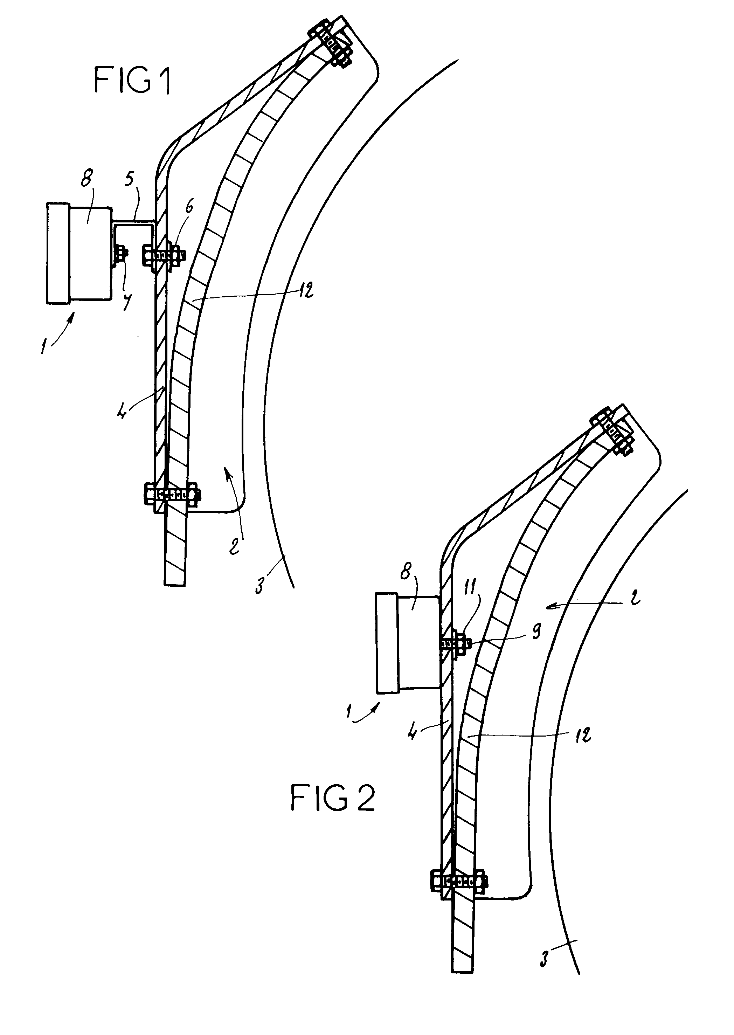

La figure 1 du dessin schématique annexé montre un dispositif de fixation connu, pour feux arrière de signalisation désignés globalement par le repère 1, à fixer sur l'élément arrière 2 d'un garde-boue réalisé en plusieurs éléments, et monté autour d'une roue arrière 3 du véhicule concerné. L'élément arrière 2 du garde-boue possède une face sensiblement verticale 4, tournée vers l'arrière. Les feux arrière 1 sont fixés sur la face verticale 4 de l'élément de garde-boue 2 par l'intermédiaire d'une pièce de liaison 5, appelée support de feux, qui possèdent un profil en U renversé. Le support de feux 5 est fixé par l'une de ses ailes verticales, au moyen de vis 6, sur la face verticale 4 de l'élément de garde-boue 2. Ce support de feux 5 est fixé par son autre aile verticale, également au moyen de vis 7, à l'arrière du boîtier 8 des feux arrière 1.

Un tel dispositif de fixation comporte l'inconvénient de nécessiter des opérations de vissage multiples, dans des zones peu accessibles. Les espaces de séparation entre les pièces, correspondant en particulier à la largeur du support de feux 5, sont en outre peu esthétiques. Par ailleurs, les supports de feux étant des pièces visibles, réalisées le plus souvent en métal, il est nécessaire de les protéger par application d'un traitement anti-corrosion et d'une couche de peinture de finition, de la même couleur que le châssis du véhicule. Ces opérations de protection et de finition entraînent, du point de vue économique, un coût supplémentaire non négligeable lié à la fixation des feux arrière.

Une autre solution connue, illustrée par la figure 2 (où les éléments correspondant à ceux de la figure 1 sont désignés par les mêmes repères numériques), consiste à fixer le boîtier 8 des feux arrière de signalisation 1 directement sur la face verticale 4, tournée vers l'arrière, de l'élément arrière de garde-boue 2. La fixation du boîtier 8 est réalisée au moyen de deux vis 9, qui traversent l'épaisseur de l'élément de garde-boue 2. Une rondelle 10 de grand diamètre et un écrou 11 doivent alors être montés sur chaque vis 9 par l'intérieur du garde-boue.

Cette opération est le plus souvent impossible, s'il n'est pas procédé au préalable au démontage partiel de la bavette anti-projections 12 qui recouvre habituellement toute la face interne de l'élément arrière de garde-boue 2, comme le montre la figure 2. Un mode opératoire alternatif consiste à procéder au montage de la bavette anti-projections 12 seulement après le montage des feux arrière 1 sur le garde-boue.

Dans tous les cas, l'opération de fixation des feux arrière par vissage direct sur le garde-boue ne pouvant être faite rapidement sur la ligne de montage principale des véhicules concernés, un poste de préparation situé au dehors de cette ligne de montage est nécessaire. Une telle organisation est toutefois incompatible avec la politique industrielle actuelle de livraison de sous-ensembles pré-montés par les fournisseurs de garde-boue.

Un inconvénient supplémentaire de la fixation directe des feux arrière par vissage sur le garde-boue est le risque de rupture de la matière plastique constitutive du garde-boue, car les contraintes mécaniques sont excessivement concentrées sur les points de fixation par vis (habituellement au nombre de deux) des feux arrière.

Un autre dispositif de fixation sur un garde-boue de véhicule utilitaire, pour un bloc de feux arrière, est connu par le modèle d'utilité allemande 298 07 234 (HBN-TEKNIK A/S). Le garde-boue comporte ici une longue ouverture rectangulaire, sur les bords inférieur et supérieur de laquelle sont formées des glissières horizontales continues. Le bloc amovible des feux comporte, à sa base et à son sommet, des rebords horizontaux continus qui sont engageables, par coulissement, dans les glissières horizontales continues formées sur les bords de l'ouverture précitée. Avec un tel dispositif, le montage des feux arrière nécessite un mouvement de translation horizontale du bloc, sur une longueur importante égale à la longueur de ce bloc, avec un sérieux risque de coincement. De plus, la très large ouverture, pratiquée dans le garde-boue, diminue considérablement la rigidité de ce garde-boue, précisément dans la zone de fixation des feux qui devrait au contraire être renforcée.

L'invention vise à remédier à l'ensemble des inconvénients exposés précédemment, et elle a donc pour but de fournir un dispositif perfectionné de fixation pour feux arrière de signalisation, permettant un assemblage rapide et simple de tels feux arrière sur la ligne principale de montage des véhicules concernés, en évitant les problèmes d'accessibilité et sans risquer d'endommager les garde-boue et les feux arrière, ni de diminuer la résistance mécanique des garde-boue.

A cet effet, l'invention a essentiellement pour objet un dispositif de fixation pour feux arrière de signalisation de véhicules routiers ou agricoles, plus particulièrement un dispositif de fixation de tels feux arrière sur une partie, tournée vers l'arrière, d'un garde-boue de véhicule, cette partie comportant une face sensiblement verticale, le dispositif comprenant une pièce ou partie d'assemblage, prévue derrière le boîtier des feux arrière à fixer, laquelle pièce ou partie d'assemblage comporte, le long de son bord supérieur et de son bord inférieur sensiblement horizontaux, des conformations en saillie, tandis que des éléments de glissière sensiblement horizontaux, complémentaires desdites conformations en saillie, sont solidaires de la partie située sur le véhicule, telle que partie arrière de garde-boue, sur laquelle doivent être fixés les feux arrière, de manière à permettre un montage de ces feux arrière par engagement et translation horizontale des conformations en saillie de la pièce ou partie d'assemblage dans les éléments de glissière, le dispositif étant caractérisé en ce que la pièce ou partie d'assemblage, liée au boîtier des feux arrière, présente le long de son bord supérieur et de son bord inférieur des créneaux résultant de plusieurs pattes saillantes séparées les unes des autres par des évidements, tandis que les éléments de glissière, solidaires de la partie située sur le véhicule, telle que partie arrière de garde-boue, sont constitués par des griffes séparées par des intervalles, disposées suivant deux alignements horizontaux superposés, en correspondance avec les créneaux des bords supérieur et inférieur de la pièce ou partie d'assemblage liée au boîtier des feux arrière.

Ainsi, le montage des feux arrière s'effectue en engageant les pattes saillantes des créneaux de la pièce ou partie d'assemblage, liée aux feux arrière, entre les griffes de la partie complémentaire, liée au véhicule, puis en décalant latéralement l'ensemble des feux arrière avec sa pièce ou partie d'assemblage, par un mouvement de translation horizontale (sur une course égale à la longueur d'un créneau), de manière à amener toutes les pattes saillantes sous les griffes correspondantes.

La pièce d'assemblage, qui est en quelque sorte l'interface entre les feux arrière et une partie de véhicule, notamment un garde-boue, peut être une pièce rapportée, fixée par vissage ou soudage sur le boîtier des feux arrière. Selon une autre forme d'exécution, la pièce ou partie d'assemblage est intégrée, sous forme d'insert ou directement par moulage, au boîtier des feux arrière.

Dans une forme de réalisation particulière, la pièce ou partie d'assemblage possède une section verticale en oméga, dont les deux ailes, écartées du boîtier des feux arrière, comportent les pattes saillantes, formant les créneaux. Dans ce cas, la partie située sur le véhicule, telle que partie arrière de garde-boue, peut comporter encore des nervures horizontales, continues ou discontinues, prévues pour le positionnement, le guidage et le support de la pièce ou partie d'assemblage de section en oméga, liée au boîtier des feux arrière, ces nervures coopérant avec les portions horizontales de la pièce ou partie d'assemblage de section en oméga.

Avantageusement, la partie située sur le véhicule, telle que partie arrière de garde-boue, comporte encore des moyens de blocage, de butée ou de freinage, coopérant avec la pièce ou partie d'assemblage liée au boîtier des feux arrière, pour assurer le maintien des feux arrière dans leur position de montage finale. Ces moyens peuvent, en particulier, être réalisés sous la forme de languettes de verrouillage, déformables élastiquement, situées dans des intervalles entre les griffes, et aptes à prendre place entre des pattes saillantes de la pièce ou partie d'assemblage.

Les éléments de glissière, réalisés sous forme de griffes, et/ou les nervures horizontales, et/ou les languettes de verrouillage, sont réalisables directement de moulage avec la partie arrière du garde-boue. En variante, les éléments de glissière, sous forme de griffes, et/ou les nervures horizontales, et/ou les languettes de verrouillage, sont portés par une pièce additionnelle, fixée elle-même sur la face verticale de la partie arrière de garde-boue.

Dans l'ensemble, le système de fixation de feux arrière, objet de l'invention, possède des avantages nombreux et particulièrement appréciables :

L'opération de montage des feux arrière sur le véhicule, ne nécessitant plus aucun vissage, devient particulièrement simple, rapide et commode, les problèmes d'accessibilité étant éliminés. En particulier, le mouvement de translation à imprimer au boîtier des feux possède une faible course, égale à la longueur d'un créneau, donc à une fraction de la largeur dudit boîtier. Ainsi, cette opération peut désormais être effectuée directement sur la ligne de montage principale des véhicules concernés. Il en résulte la suppression d'un poste spécial de montage des feux hors de la ligne principale de montage, et une économie correspondante.

Etant réalisée dans les conditions qui viennent d'être indiquées, l'opération de montage des feux arrière s'effectue sans risque d'endommager ces feux arrière lors des manutentions des sous-ensembles constitués par les garde-boue équipés de tels feux.

Le dispositif assure une fixation efficace et fiable des feux arrière : utilisant le principe de glissières horizontales, ce dispositif n'est pas sensible aux sollicitations essentiellement verticales, auxquelles il peut être soumis par le véhicule en déplacement. De plus, en cas de présence de languettes de verrouillage qui interdisent toute translation de la pièce ou partie d'assemblage, les feux arrière sont parfaitement immobilisés, sans que leur démontage volontaire soit empêché, par exemple pour un remplacement. Par ailleurs, les qualités de l'assemblage sont constantes, n'étant pas tributaires du degré de serrage de vis ou d'écrous.

Le dispositif de fixation selon l'invention est aussi mécaniquement résistant. D'une part, toute contrainte excessive au niveau de points de fixation par vis est supprimée, et les efforts sont répartis le long des glissières. D'autre part, dans le cas d'une pièce ou partie d'assemblage en oméga, les nervures qui coopèrent avec les portions horizontales de la pièce ou partie d'assemblage contribuent à supporter les contraintes de fixation dues au poids des feux arrière et aux fortes accélérations verticales pouvant être subies par l'ensemble des feux, lors du déplacement du véhicule sur un terrain accidenté. De plus, le dispositif ne nécessite aucune ouverture dans le garde-boue, qui nuirait à la rigidité de ce garde-boue, les griffes étant formées sur une face pleine. L'effort de fixation des feux est donc réparti et absorbé sur une surface importante, ce qui limite le niveau des contraintes mécaniques, et autorise ainsi l'utilisation de matière plastique pour les organes de liaison, comme la pièce d'assemblage avec créneaux et les griffes, sans risque de cassure ou de découpe de ces organes, notamment au niveau des arêtes de la pièce d'assemblage en oméga.

Par ailleurs, l'utilisation d'une telle pièce d'assemblage rapportée permet d'adapter le même dispositif de fixation à divers modèles de feux arrière, variables selon les constructeurs ou types de véhicules, en permettant leur montage sur le même garde-boue.

La pièce d'assemblage, de relativement faible épaisseur, reste dissimulée entre les feux arrière et le garde-boue, de sorte qu'elle ne nécessite pas de finition esthétique, d'où une simplification et une économie supplémentaires, et le dispositif de fixation selon l'invention possède en conséquence, lui-même, un caractère esthétique.

Dans le cas où les éléments de glissière sous forme de griffes, les nervures et les éventuelles languettes de verrouillage sont portées par une pièce additionnelle, fixée elle-même sur la face verticale arrière du garde-boue, cette pièce additionnelle peut constituer un carénage esthétique et/ou protecteur pour les feux arrière. De plus, ce dernier mode de réalisation permet d'adapter le dispositif de fixation, objet de l'invention, à des garde-boue existants, sur lesquels aucune glissière n'a été préalablement formée.

Enfin, le dispositif de fixation selon l'invention procure aussi un gain de temps dans la maintenance des véhicules qui en sont équipés, notamment pour le remplacement des feux arrière.

L'invention sera de toute façon mieux comprise à l'aide de la description qui suit, en référence au dessin schématique annexé représentant, à titre d'exemple, une forme d'exécution de ce dispositif de fixation rapide pour feux arrière de véhicules routiers ou agricoles :
Figures 1 et 2 (déjà mentionnées) représentent deux dispositifs de fixation pour feux arrière, appartenant à l'état de la technique ;
Figure 3 est une vue en perspective d'un dispositif de fixation conforme à la présente invention, les feux arrière étant séparés du garde-boue ;
Figure 4 est une vue de côté de ce dispositif de fixation, les feux arrière étant montés sur le garde-boue (ici représenté très partiellement) ;
Figure 5 est une vue de face très schématique du dispositif selon l'invention, montrant la position d'engagement de la pièce d'assemblage des feux arrière ;
Figure 6 est une vue similaire à figure 5, mais correspondant à la position de montage finale.

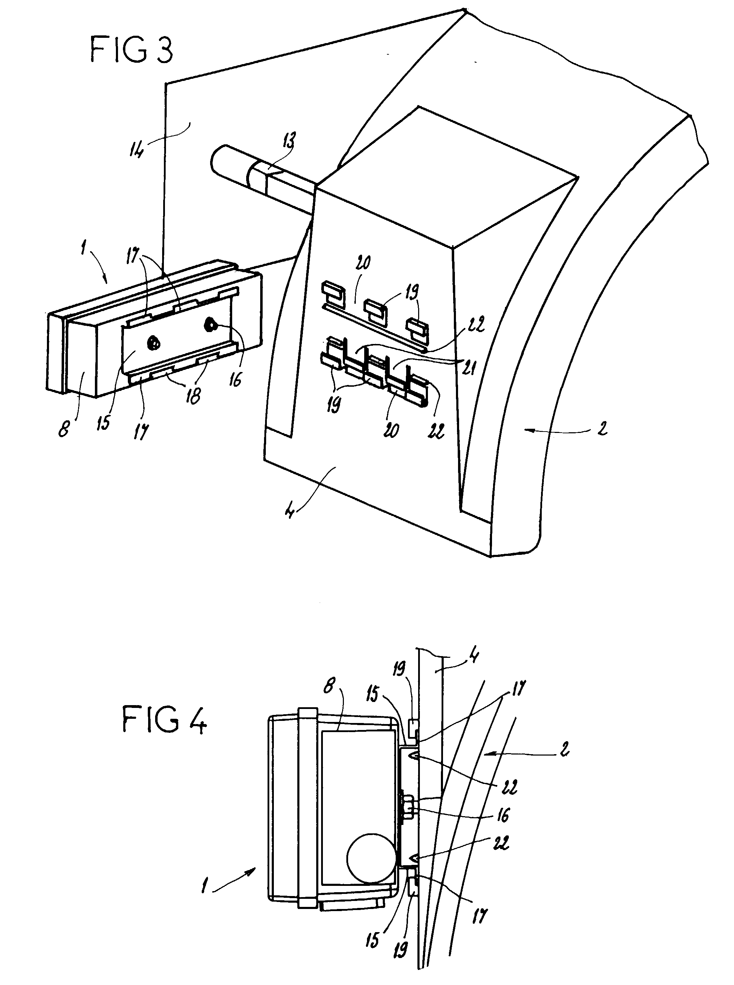

La figure 3 montre la partie arrière d'un garde-boue 2, fixée au moyen d'un tube-support 13 sur le châssis 14 d'un véhicule routier utilitaire. La partie arrière de garde-boue 2 possède ici encore une face sensiblement verticale 4, tournée vers l'arrière, qui est prévue pour recevoir les feux arrière de signalisation 1.

Le dispositif de fixation comprend ici une pièce d'assemblage 15, de section verticale en oméga, fixée au moyen de vis 16 derrière le boîtier 8 des feux arrière 1. La pièce d'assemblage 15, s'étendant dans le sens horizontal, présente, le long de son bord supérieur et de son bord inférieur espacés du boîtier 8, des créneaux résultant de plusieurs pattes saillantes 17 séparées les unes des autres par des évidements 18. Les créneaux ainsi formés sur le bord supérieur de la pièce d'assemblage 15, avec pattes 17 tournées vers le haut, se situent en correspondance avec les créneaux formés sur le bord inférieur de ladite pièce 15, avec pattes 17 tournées vers le bas.

La pièce d'assemblage 15 peut être réalisée en aluminium profilé ou en tout autre métal ou alliage métallique, ou encore en matière plastique moulée ou découpée.

En correspondance avec cette pièce d'assemblage 15, la face verticale 4 du garde-boue 2 comporte deux glissières horizontales superposées, formées chacune par une succession de griffes 19 alignées, séparées par des intervalles 20. La glissière supérieure comporte des griffes 19, ayant un profil en crochet, qui sont toutes dirigées vers le bas. La glissière inférieure comporte des griffes 19, ayant un profil en crochet, qui sont toutes tournées vers le haut. Les griffes respectives 19 de la glissière supérieure et de la glissière inférieure, de même que leurs intervalles 20, sont situées en correspondance.

Dans l'exemple de réalisation représenté, les griffes 19 sont réalisées d'une seule pièce, notamment par moulage, avec la face verticale 4 du garde-boue 2. Sur cette face verticale 4 sont encore formées deux languettes de verrouillage 21 déformables élastiquement, situées dans les intervalles 20 entre les griffes 19, sensiblement au niveau de la glissière inférieure.

Avec le dispositif précédemment décrit, le montage des feux arrière 1 sur le garde-boue 2 s'opère de la façon suivante :

Au départ, l'opérateur dispose des feux arrière 1 déjà équipés de la pièce d'assemblage 15. Le véhicule, quant à lui, a été préalablement équipé de ses garde-boue.

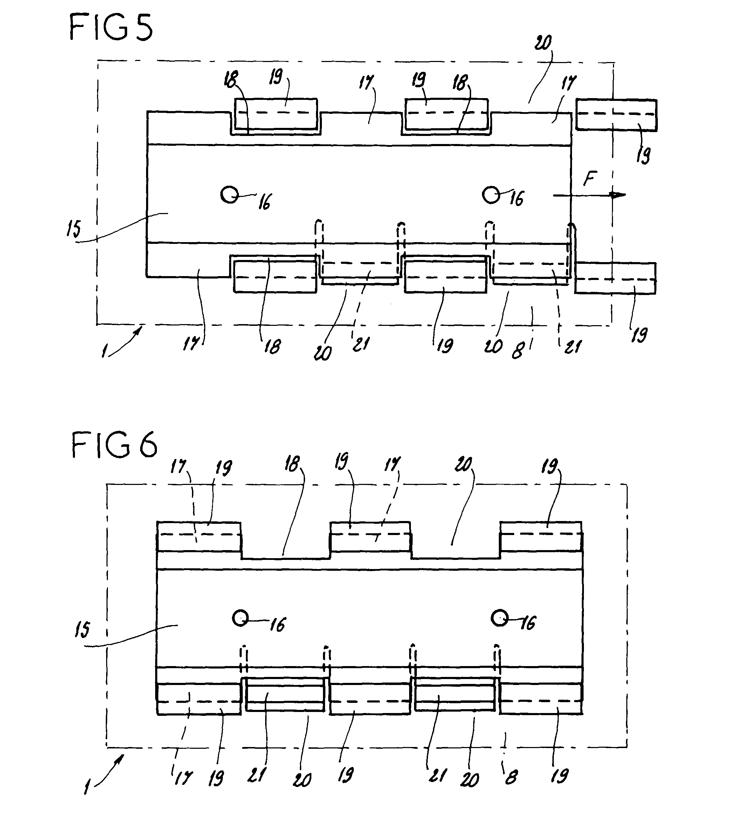

L'opérateur présente alors les feux arrière 1 sur la zone de fixation prévue à l'arrière du garde-boue 2 correspondant, c'est-à-dire en regard de la face verticale 4, à hauteur des glissières formées par les alignements de griffes 19. Plus particulièrement, comme montré sur la figure 5, les feux arrière 1 sont ainsi approchés du garde-boue 2 dans une position d'engagement, pour laquelle les pattes 17 de la pièce d'assemblage 15 sont décalées latéralement par rapport aux griffes 19, et se situent en correspondance avec les intervalles 20 existant entre ces griffes 19. Les évidements 18, situés entre les pattes 17 de la pièce d'assemblage 15, se placent alors en correspondance avec les griffes 19.

L'opérateur exerce alors sur l'ensemble des feux arrière 1 une pression dirigée vers l'avant du véhicule, afin de faire fléchir les languettes de verrouillage 21, puis il pousse horizontalement l'ensemble des feux arrière 1, selon la flèche F, de manière à amener toutes les pattes 17 de la pièce d'assemblage 15 sous les griffes 19 solidaires du garde-boue 2. Dans la position finale ainsi atteinte, illustrée par la figure 6, les évidements 18 de la pièce d'assemblage 15 viennent en correspondance avec les intervalles 20 entre les griffes 19, tandis que les languettes 21, venues en correspondance avec des évidements 18 de la pièce 15, reviennent de manière élastique dans leur position initiale. Dans cette position, les parties terminales des languettes 21 s'avancent entre les pattes 17 inférieures de la pièce d'assemblage 15, et assurent la retenue de cette pièce 15 en interdisant tout déplacement en translation indésirable de celle-ci, donc des feux arrière 1 qui se trouvent ainsi définitivement montés.

Pour le montage des feux arrière 1, le positionnement initial de la pièce d'assemblage 15 et son guidage en translation peuvent être facilités par des nervures horizontales 22, continues ou discontinues, formées sur la face verticale 4 du garde-boue 2, et coopérant avec les portions horizontales de la pièce d'assemblage 15 - voir figures 3 et 4.

Le démontage des feux arrière 1, pour un remplacement éventuel ou pour une quelconque opération de maintenance, s'effectue en appuyant simultanément sur les deux languettes de verrouillage 21, et en faisant glisser horizontalement l'ensemble des feux arrière 1 avec sa pièce d'assemblage 15, jusqu'à le ramener dans la position de la figure 5, où les pattes 17 de la pièce 15 sont complètement dégagées des griffes 19 solidaires du garde-boue 2. Les feux arrière 1 peuvent alors être séparés du garde-boue 2, par un mouvement d'avant en arrière.

L'on ne s'éloignerait pas du cadre de l'invention, telle que définie dans les revendications annexées :
- par des modifications de détails constructifs, notamment en prévoyant des pattes 17 et des griffes 19 en nombre plus ou moins grand, respectivement sur la pièce d'assemblage 15 et le garde-boue 2 ;
- en intégrant la pièce d'assemblage 15 lors du moulage du boîtier 8 des feux arrière 1, soit en la réalisant sous la forme d'une pièce métallique en insert, soit en l'obtenant directement par des formes venant de moulage, dans le cas d'une réalisation en matière plastique ;
- dans le cas où la pièce d'assemblage 15 reste une pièce rapportée, en la fixant par soudage sur le boîtier 8 des feux arrière 1 ;
- en réalisant les griffes 19 et/ou les nervures 22, situées du côté du garde-boue 2, non seulement comme des parties venant de moulage avec ce garde-boue, mais encore sous la forme de pièces rapportées, pouvant être fixées notamment par soudage ;
- en solidarisant les griffes 19 et/ou les nervures 22 avec une pièce additionnelle, fixée elle-même sur la face verticale 4 du garde-boue 2, cette pièce additionnelle pouvant par ailleurs constituer un carénage esthétique et/ou protecteur des feux arrière 1 ;
- dans une réalisation équivalente, en remplaçant les griffes 19 par des parties de glissières en creux, formées dans l'épaisseur de la face verticale 4 du garde-boue 2, ces parties de glissières recevant encore une pièce d'assemblage ou des parties complémentaires adaptées, solidaires du boîtier 8 des feux arrière 1, qui viendraient se monter par le même principe de translation horizontale ;
- en remplaçant les languettes de verrouillage 21 par tous moyens de blocage, de butée ou de freinage, propres à maintenir les feux arrière 1 dans leur position de montage finale ;
- en destinant le même dispositif de fixation à des véhicules autres que des véhicules utilitaires, et notamment à des véhicules agricoles, éventuellement pour le montage de feux arrière sur une partie de véhicule autre qu'un garde-boue.

## Revendications

1. Dispositif de fixation pour feux arrière de signalisation de véhicules routiers ou agricoles, plus particulièrement dispositif de fixation de tels feux arrière (1) sur une partie, tournée vers l'arrière, d'un garde-boue (2) de véhicule, cette partie comportant une face sensiblement verticale (4), le dispositif comprenant une pièce ou partie d'assemblage (15), prévue derrière le boîtier (8) des feux arrière (1) à fixer, laquelle pièce ou partie d'assemblage (15) comporte, le long de son bord supérieur et de son bord inférieur sensiblement horizontaux, des conformations en saillies (17), tandis que des éléments de glissière (19) sensiblement horizontaux, complémentaires desdites conformations en saillie (17), sont solidaires de la partie située sur le véhicule, telle que partie arrière de garde-boue (2), sur laquelle doivent être fixés les feux arrière (1), de manière à permettre un montage de ces feux arrière (1) par engagement et translation horizontale (F) des conformations en saillie (17) de la pièce ou partie d'assemblage (15) dans les éléments de glissières (19), caractérisé en ce que la pièce ou partie d'assemblage (15), liée au boîtier (8) des feux arrière (1), présente le long de son bord supérieur et de son bord inférieur des créneaux résultant de plusieurs pattes saillantes (17) séparées les unes des autres par des évidements (18), tandis que les éléments de glissière, solidaires de la partie située sur le véhicule, telle que partie arrière de garde-boue (2), sont constitués par des griffes (19) séparées par des intervalles (20), disposées suivant deux alignements horizontaux superposés, en correspondance avec les créneaux des bords supérieur et inférieur de la pièce ou partie d'assemblage (15) liée au boîtier (8) des feux arrière (1).

2. Dispositif de fixation pour feux arrière de véhicules selon la revendication 1, caractérisé en ce que la pièce d'assemblage (15) est une pièce rapportée, fixée par vissage (16) ou soudage sur le boîtier (8) des feux arrière (1).

3. Dispositif de fixation pour feux arrière de véhicules selon la revendication 1 ou 2, caractérisé en ce que la pièce ou partie d'assemblage (15) est intégrée, sous forme d'insert ou directement par moulage, au boîtier (8) des feux arrière (1).

4. Dispositif de fixation pour feux arrière de véhicules selon l'une quelconque des revendications 1 à 3, caractérisé en ce que la pièce ou partie d'assemblage (15) possède une section verticale en oméga, dont les deux ailes, écartées du boîtier (8) des feux arrière (1), comportent les parties saillantes (17), formant les créneaux.

5. Dispositif de fixation pour feux arrière de véhicules selon la revendication 4, caractérisé en ce que la partie située sur le véhicule, telle que partie arrière de garde-boue (2), comporte encore des nervures horizontales (22), continues ou discontinues, prévues pour le positionnement, le guidage et le support de la pièce ou partie d'assemblage (15) de section en oméga, liée au boîtier (8) des feux arrière (1), ces nervures (22) coopérant avec les portions horizontales de la pièce ou partie d'assemblage (15) de section en oméga.

6. Dispositif de fixation pour feux arrière de véhicules selon l'une quelconque des revendications 1 à 5, caractérisé en ce que la partie située sur le véhicule, telle que partie arrière de garde-boue (2), comporte encore des moyens (21) de blocage, de butée ou de freinage, coopérant avec la pièce ou partie d'assemblage (15) liée au boîtier des feux arrière, pour assurer le maintien des feux arrière (1) dans leur position de montage finale.

7. Dispositif de fixation pour feux arrière de véhicules selon la revendication 6, caractérisé en ce que lesdits moyens sont réalisés sous la forme de languettes de verrouillage (21), déformables élastiquement, situées dans des intervalles (20) entre les griffes (19), et aptes à prendre place entre des pattes saillantes (17) de la pièce ou partie d'assemblage (15).

8. Dispositif de fixation pour feux arrière de véhicules selon l'une quelconque des revendications 1 à 7, caractérisé en ce que les éléments de glissière, sous forme de griffes (19), et/ou les nervures horizontales (22), et/ou les languettes de verrouillage (21), sont réalisées directement de moulage avec la partie arrière de garde-boue (2).

9. Dispositif de fixation pour feux arrière de véhicules selon l'une quelconque des revendications 1 à 7, caractérisé en ce que les éléments de glissière, sous forme de griffes (19), et/ou les nervures (22), et/ou les languettes de verrouillage (21), sont portés par une pièce additionnelle, fixée elle-même sur la face verticale (4) de la partie arrière de garde-boue (2), ladite pièce additionnelle pouvant constituer un carénage pour les feux arrière (1).
